# EUROPÄISCHE PATENTANMELDUNG

(11) **EP 0 569 108 A1**
(43) Veröffentlichungstag der Anmeldung: **10.11.1993**
(21) Anmeldenummer: 93250108.3
(22) Anmeldetag: 16.04.1993
(51) Int. Cl.: B01D 33/04

(54) **Vorrichtung zum Reinigen von Kühlschmierstoffen**

(30) Priorität: 06.05.1992 DE 4214902
(71) Anmelder: Bürener Maschinenfabrik GmbH, 33142 Büren (DE)
(72) Erfinder: Triesch, Josef, W-4000 Düsseldorf (DE); Kolisch, Eberhard, W-4044 Kaarst 2 (DE); Heusler, Helmut, W-4330 Mülheim (DE)
(74) Vertreter: Sparing - Röhl - Henseler Patentanwälte

(57) **Zusammenfassung**

Die Erfindung betrifft eine Vorrichtung zum Reinigen und Rückführen von Kühlschmierstoff bei spangebender Metallbearbeitung von Spänen und Feststoffen, mit einem endlosen, umlaufenden Stahlscharnierband, in einem als Späneförderer ausgebildeten Vollkastengerüst, das aus einem waagerechten Flachkastenteil und einem kastenartigen Aufsteigeteil besteht, das am oberen Ende zum Abwerfen der Späne offen ist, mit einem Schmutzflüssigkeitsbehälter und einem diesem zugeordneten Unterdruckbandfilter zum Reinigen des Kühlschmierstoffes von feinen Spänen. Um eine Vorrichtung zu schaffen, die mit geringer Bauhöhe und kleiner Grundfläche platzsparend und/bzw. neben der Bearbeitungsmaschine aufgestellt werden kann und die gegenüber der bekannten Lösung ein großes Kühlschmierstoffvolumen ermöglicht, wird vorgeschlagen, daß der Unterdruckbandfilter zwischen dem Ober-(6a) und Untertrum (6b) des Späneförderers (1) angeordnet ist.

## Beschreibung

Die Erfindung betrifft eine Vorrichtung zum Reinigen und Rückführen von Kühlschmierstoff bei spangebender Metallbearbeitung von Spänen und Feststoffen, mit einem endlosen, umlaufenden Stahlscharnierband in einem als Späneförderer ausgebildeten Vollkastengerüst, das aus einem waagerechten Flachkastenteil und einem kastenartigen Aufsteigeteil besteht, das am oberen Ende zum Abwerfen der Spane offen ist, mit einem Schmutzflüssigkeitsbehälter und einem diesem zugeordneten Unterdruckbandfilter zum Reinigen des Kühlschmierstoffes von feinen Spänen.

Eine Vorrichtung der gattungsgemäßen Art ist aus dem deutschen Patent 31 27 440 bekannt. Solche Einrichtungen dienen dazu, die an Bearbeitungsmaschinen anfallenden Kühlschmierstoffe sowohl von groben Metallspänen wie auch feinen Feststoffen zu reinigen, um den so gereinigten Kühlschmierstoff erneut der Bearbeitungsmaschine zuzuführen. Die Einrichtungen sollen möglichst nahe, besser noch unterhalb der Bearbeitungsmaschine aufgestellt werden, d. h. sie sollen eine möglichst geringe Bauhöhe aufweisen und wenig Stellplatz benötigen. Die vorbekannte Kombination aus Späneförderer und Unterdruckfilter baut relativ hoch, so daß die Anordnung unterhalb der Bearbeitungsmaschine nicht möglich ist. Zwischen den aufeinandergesetzten Aggregaten Späneförderer und Filter entstehen Dichtprobleme; die Anlage hat einen großen Grundflächenbedarf bei geringem Kühlschmierstoffvolumen.

Aufgabe der vorliegenden Erfindung ist es, ausgehend von einem Stand der Technik nach dem deutschen Patent 31 27 440, eine Vorrichtung der gattungsgemäßen Art zu schaffen, die mit geringer Bauhöhe und kleiner Grundfläche platzsparend unter bzw. neben der Bearbeitungsmaschine aufgestellt werden kann und die gegenüber der bekannten Lösung ein großes Kühlschmierstoffvolumen ermöglicht.

Zur Lösung der Aufgabe wird erfindungsgemäß vorgeschlagen, daß der Unterdruckbandfilter zwischen dem Ober- und Untertrum des Späneförderers angeordnet ist. Durch den Vorschlag der Erfindung wird die ßauhöhe der Vorrichtung erheblich reduziert, weil für die Anordnung des Unterdruckbandfilters der ohnehin zwischen dem Stahlscharnierband des Späneförderers vorhandene Raum genutzt wird.

Nach einer weiteren Ausgestaltung der Erfindung ist vorgesehen, daß der Unterdruckbandfilter aus einer Unterdruckkammer besteht, die mindestens im unteren Bereich des Späneförderers den Raum zwischen dessen Ober-und Untertrum ausfüllt und die von einem endlosen Filterband umgeben ist, welches zwischen der Innenseite des Späneförderers und der Außenseite der teilweise perforierten Unterkammer verläuft. Mit geringstem Platzbedarf wird durch die Erfindung eine Kombination von Späneförderer und Unterdruckfilter geschaffen, in dem die Unterdruckkammer in Raum und Form dem Platz zwischen dem Stahlscharnierband des Späneförderers angepaßt wird. In gleicher Weise wird die Form der Unterkammer zur Führung des Endlosfilterbandes benutzt, welches platzsparend zwischen der Unterdruckkammer und dem Stahlscharnierband verläuft. Auf diese Weise kann der mit Spänen und sonstigen Verunreinigungen verschmutzte Kühlschmierstoff von der Bearbeitungsmaschine auf das Obertrum des Späneförderers geleitet werden, der auf seinem perforierten Förderband grobe Späne zurückhält, die in bekannter Weise ausgetragen werden. Feine Partikel und der Kühlschmierstoff passieren das Stahlscharnierband des Späneförderers ungehindert. Feine Partikel werden von dem darunter angeordneten Endlosfilterband mit feinmaschigem Gewebe zurückgehalten bzw. durch den Unterdruck in der Unterdruckkammer auf die Außenoberfläche des Endlosfilterbandes gesaugt. Dadurch bildet sich in bekannter Weise auf dem Endlosfilterband ein Filterkuchen, der durch das Endlosfilterband zur Austragstelle transportiert wird.

Vorzugsweise folgt das Endlosfilterband dem Verlauf des Späneförderers und ist am oberen Ende des Aufsteigteils um eine Abwurftrommel geführt, unterhalb derer Austragmittel zum seitlichen Austragen des Filterkuchens vorgesehen sind. Als Austragmittel kommt beispielsweise eine in einem Trog angeordnete Schnecke in Frage.

Durch die Anordnung der Unterdruckkammer zwischen Ober- und Untertrum des Späneförderers ist die Flüssigkeit des Kühlschmierstoffes gezwungen, den Weg durch das Filtermittel zu nehmen. Zur Erzeugung des notwendigen Unterdruckes in der Unterdruckkammer werden Pumpen eingesetzt, die gleichzeitig zur Förderung des Filtrates (gereinigten Kühlschmierstoffes) zur Bearbeitungsmaschine verwendet werden können.

In einer weiteren Ausgestaltung der Erfindung ist vorgesehen, daß in einem nicht von der, Unterdruckkammer ausgefüllten Bereich zwischen Ober- und Untertrum des Späneförderers eine Spül- und/oder Reinigungseinrichtung für das Endlosfilterband vorgesehen ist. Diese Spül- und/oder Reinigungsvorrichtung dient der Säuberung des Filterbandes von feinen Schmutzpartikeln, die nach dem Abstreifen des Filterkuchens im Endlosfilterband verblieben sind. Die spül- und/oder Reinigungsvorrichtung kann erfindungsgemäß mittels Eigen- oder Fremdmedium sowie mit Hoch- oder Niederdruck betrieben werden. Die Reinigungsstation ist stationär angeordnet, das Endlosfilterband wird an ihr vorbeigeführt.

Besonders günstig ist der Zulauf des Kühlschmierstoffes im Bereich des waagerechten Flachkastenteils oberhalb des Späneförderers vorgesehen und die Filtratabsaugung erfolgt seitlich aus der Unterdruckkammer.

Durch die Erfindung wird eine raumsparende kompakte Kombination von Späneförderer und Unterdruckfilter geschaffen, die wirtschaftlich an Bearbeitungsmaschinen eingesetzt werden kann.

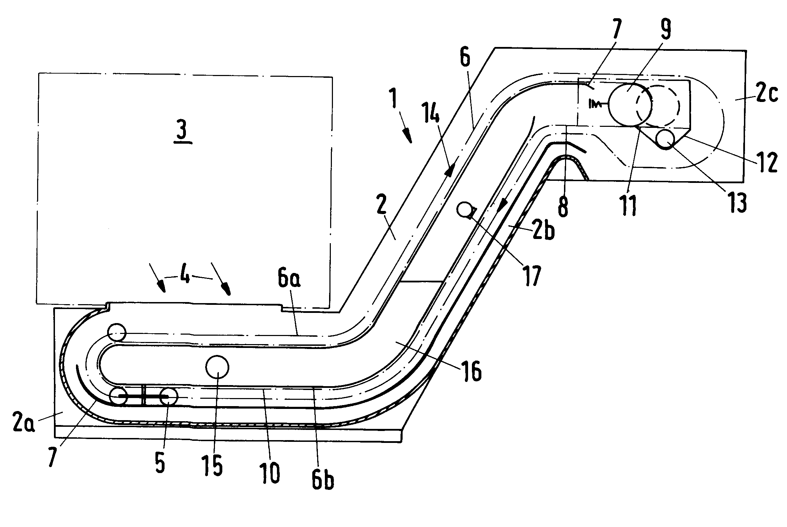

Ein Ausführungsbeispiel der Erfindung ist grob schematisch in der Zeichnung dargestellt und wird nachfolgend beschrieben.

Die erfindungsgemäße Vorrichtung zum Reinigen und Rückführen von Kühlschmierstoff bei spangebender Metallbearbeitung von Spänen und Feststoffen ist insgesamt mit 1 bezeichnet. Sie besteht aus dem Vollkastengerüst 2, was seinerseits aus dem waagerechten Flachkastenteil 2a und dem kastenartigen Aufsteigeteil 2b besteht, welches am oberen Ende den Austragekopf 2c bildet. Mit 3 ist die Bearbeitungsmachine angedeutet, die unmittelbar über dem waagerechten Flachkastenteil 2a des Vollkastengerüstes 2 angeordnet ist. Der Zulauf des Kühlschmierstoffes erfolgt bei 4 in das Vollkastengerüst 2, das den Schmutzflüssigkeitsbehälter für den zu reinigenden Kühlschmierstoff bildet.

In dem Vollkastengerüst 2 läuft das an Führungsrollen 5 geführte Stahlscharnierband 6 um, wobei die Rollen 5 durch entsprechend gestaltete Schienen wie bei 7 angedeutet, geleitet werden. Die Führungsbahn des Stahlscharnierbandes 6 ist strichpunktiert eingezeichnet. Im Bereich zwischen Obertrum 6a und Untertrum 6b des Stahlscharnierbandes 6 ist die Unterdruckkammer 16 angeordnet, die in ihrer Gestaltung dem Raum zwischen Obertrum 6a und Untertrum 6b angepaßt ist. Um die Unterdruckkammer herum verläuft, wie bei 8 angedeutet, das Endlosfilterband, das im Bereich des Austragekopfes 2c um das Endlosfilterband 8 spannende Umlenkrolle 9 geführt ist. Das Endlosfilterband kann sowohl aus einem feinmaschigen Gewebe oder Mikrolochband bestehen und liegt auf der Unterdruckkammer 16 auf.

Bei 10, also im Bereich des Untertrums 6b des Stahlscharnierbandes 6, ist die Unterdruckkammer perforiert, so daß mit Hilfe des in der Unterdruckkammer 16 bestehenden Unterdruckes der Kühlschmierstoff durch das Stahlscharnierband 6 und das Endlosfilterband 8 hindurchgesaugt wird. Dabei bleiben feine, Partikel auf der Oberfläche des Endlosfilterbandes 8 haften und bilden einen Filterkuchen. Dieser Filterkuchen wird beim Fördern des Endlosfilterbandes im Uhrzeigersinn über den waagerechten und aufsteigenden Teil des Endlosfilterbandes transportiert und im Abwerfbereich 2c ausgetragen. Dazu sind Abstreifer 11 vorgesehen, die den Filterkuchen von der Oberfläche des Endlosfilterbandes 8 lösen und in den Trog 12 werfen, von wo aus er über die Förderschnecke 13 seitlich aus dem Bereich zwischen Obertrum 6a und Untertrum 6b des Stahlscharnierbandes 6 ausgetragen wird. In gleicher Weise werden die vom Stahlscharnierband 6 zurückgehaltenen Späne in Pfeilrichtung 14 ausgetragen und aus dem unten offenen Austragekopf 2c abgeworfen.

Das bei 15 abgesaugte Filtrat wird in nicht dargestellter Weise erneut der Bearbeitungsmaschine 3 zugeleitet.

Bei 17 ist eine erfindungsgemäße Spül- und/oder Reinigungseinrichtung angedeutet, die im dargestellten Ausführungsbeispiel Eigenmedium unter Hochdruck auf die Rückseite (Innenseite) des Endlosfilterbandes 8 richtet. Dadurch werden feine Schmutzpartikel aus dem Endlosfilterband 8 herausgespült, während dieses an der Spül- und/oder Reinigungsvorrichtung vorbeitransportiert wird.

## Patentansprüche

1. Vorrichtung zum Reinigen und Rückführen von Kühlschmierstoff bei spangebender Metallbearbeitung von Spänen und Feststoffen, mit einem endlosen, umlaufenden Stahlscharnierband in einem als Späneförderer ausgebildeten Vollkastengerüst, das aus einem waagerechten Flachkastenteil und einem kastenartigen Aufsteigeteil besteht, das am oberen Ende zum Abwerfen der Späne offen ist, mit einem Schmutzflüssigkeitsbehälter und einem diesem zugeordneten Unterdruckbandfilter zum Reinigen des Kühlschmierstoffes von feinen Spänen,
dadurch gekennzeichnet,
daß der Unterdruckbandfilter zwischen dem Ober- (6a) und Untertrum (6b) des Späneföderers (1) angeordnet ist.

2. Vorrichtung nach Anspruch 1,
dadurch gekennzeichnet,
daß der Unterdruckbandfilter - wie an sich bekannt - aus einer Unterdruckkammer (16) besteht, die mindestens im unteren Bereich des Späneförderers den Raum zwischen dessen Ober- (6a) und Untertrum (6b) ausfüllt und die von einem Endlosfilterband (8) umgeben ist, welches zwischen der Innenseite des Späneförderers und der Außenseite der teilweise perforierten (10) Unterdruckkammer (16) verläuft.

3. Vorrichtung nach Anspruch 1 und 2,
dadurch gekennzeichnet,
daß das Endlosfilterband (8) dem Verlauf des Späneförderers folgend am oberen Ende des Aufsteigeteils (2b) um eine Abwurftrommel (9) geführt ist, unterhalb derer Austragmittel (12, 13) zum seitlichen Austragen des Filterkuchens vorgesehen sind.

4. Vorrichtung nach Anspruch 1 bis 3,
dadurch gekennzeichnet,
daß in einem nicht von der Unterdruckkammer (16) ausgefüllten Bereich zwischen dem Ober- (6a) und Untertrum (6b) des Späneförderers eine Spül- und/oder Reinigungseinrichtung (17) für das Endlosfilterband vorgesehen ist.

5. Vorrichtung nach Anspruch 4,
dadurch gekennzeichnet,
daß die Spül- und/oder Reinigungsvorrichtung (17) mittels Eigen- oder Fremdmedium mit Hoch- oder Niederdruck betreibbar ist.

6. Vorrichtung nach Anspruch 1 bis 5,
dadurch gekennzeichnet,
daß der Zulauf des Kühlschmierstoffes im Bereich des waagerechten Flachkastenteils (2a) oberhalb das Späneförderers vorgesehen ist und die Filtratabsaugung (15) seitlich aus der Unterdruckkammer (16) erfolgt.
